# EUROPÄISCHE PATENTSCHRIFT

(11) **EP 1 862 767 B1**
(45) Veröffentlichungstag und Bekanntmachung des Hinweises auf die Patenterteilung: **27.05.2015**
(21) Anmeldenummer: 07405110.3
(22) Anmeldetag: 11.04.2007
(51) Int. Cl.: G01D 5/06, G01D 5/251

(54) **Sicherheits-Positionssensor für Zylinder, Zylinder mit einem solchen Positionssensor**
Safety positioning sensor for cylinder, cylinders with such a positioning sensor
Capteur de position de sécurité pour cylindre, cylindre doté d'un tel capteur de position

(30) Priorität: 01.06.2006 CH 8822006
(43) Veröffentlichungstag der Anmeldung: 05.12.2007
(73) Patentinhaber: Pilz Auslandsbeteiligungen GmbH, 73760 Ostfildern (DE)
(72) Erfinder: Schmid, Max, 7323 Wangs (CH); Mahdi, Fouad, 7402 Bonaduz (CH)
(74) Vertreter: Hasler, Erich

(56) Entgegenhaltungen:
- DE-U1- 9 115 266
- JP-A- H08 114 405
- JP-A- 2000 213 740
- US-A- 2 877 361
- US-A- 4 628 162
- US-A1- 2003 062 886

## Beschreibung

### Technisches Gebiet der Erfindung:

Die Erfindung betrifft einen Sensor zur Überwachung eines gegenüber dem Sensor translatorisch verschieblichen Teiles bezüglich seiner Position auf der Verschiebeachse und einen Zylinder mit einem solchen Sensor zur Überwachung der Position des Kolbens bezüglich seiner Bewegungsachse. Die Erfindung betrifft insbesondere einen Sicherheits-Positionssensor für einen Pneumatik- oder einen Hydraulik-Zylinder und einen solchen Zylinder mit dem Positionsssensor.

### Stand der Technik:

Es ist bekannt, die Position eines mit einem Magneten versehenen Kolbens mit einem durch den Magneten beeinflussbaren Reedkontakt zu überwachen. Dies wird oft mit Magnetringen um den Kolben herum und einem oder zwei parallel wirkenden Reedschaltern am Zylinder erreicht. Der Zylinder besteht zu diesem Zweck aus nicht magnetischem Material.

Solche Reedkontakte können indes durch von aussen angelegte Magnete dazu gebracht werden, zu schliessen, wenn sie aufgrund der Position des Zylinders offen sein sollten. Dies ist aus sicherheitstechnischen Gründen zu vermeiden. Zudem ist eine unbeabsichtigte Verschiebung des Sensors entlang der Verschiebeachse des Zylinders zu verhindern, eine Justierung der Position des Sensors jedoch zu erlauben.

### Aufgabe der Erfindung:

Es ist Aufgabe der Erfindung einen Sicherheitssensor zu schaffen, der lediglich dann eine sichere Position eines verschieblichen Teils angibt, wenn dieses Teil sich in der sicheren Position befindet. Er soll durch fremde Magnetfelder nicht dahingehend beeinflusst werden können, eine sichere Position des Zylinders anzuzeigen, wenn dieser sich in einer unsicheren Position befindet. Eine weitere Aufgabe der Erfindung ist es, die Positionierung eines Sensors und die sichere Fixierung des Sensors z.B. an einem Zylinder in dieser Position mit technisch einfachen Mitteln zu erreichen.

### Beschreibung der Erfindung:

Die Aufgabe wird erfindungsgemäss gelöst durch die Merkmale der unabhängigen Ansprüche.

Ein Sensor zur Überwachung eines gegenüber dem Sensor translatorisch verschieblichen Teiles bezüglich seiner Position auf der Verschiebeachse ist mittels eines am verschieblichen Teil angeordneten, bezüglich Nord und Südpol in Verschieberichtung orientierten Magneten betätigbar. Er weist erfindungsgemäss drei parallel angeordnete Reedkontakte auf, von denen ein erster und ein zweiter Reedkontakt in einer Ebene angeordnet sind. Sie sind mit ihren Längsachsen parallel nebeneinander angeordnet. Durch diese Anordnung sind sie durch das Magnetfeld des am verschieblichen Teil angeordneten Magneten praktisch gleichzeitig betätigbar. Der dritte Reedkontakt ist in einem Abstand zur Ebene des ersten und zweiten Reedkontakts angeordnet. Ein solcher Sensor, mit dem dritten Reedkontakt in grösserem Abstand zum betätigenden Magneten angeordnet als die beiden anderen Reedkontakte, ist sicher gegenüber einer Manipulation durch Fremdmagnetfelder. Ein von Aussen angelegtes Fremdmagnetfeld wird immer zuerst den dritten Reedschalter, der dem von aussen angelegten Magneten näher liegt, betätigen. Es ist praktisch unmöglich, den nahe von den ersten beiden Reedkontakten angeordneten dritten Reedkontakt nicht zu betätigen, wenn mit einem äusseren Magnetfeld der erste und der zweite Reedkontakt betätigt wird. Um die ersten beiden Reedkontakte zu betätigen, ohne den dritten Reedkontakt zu betätigen ist es erforderlich, einen möglichst grossen Abfall im Magnetfeld zu erreichen zwischen der Position der ersten beiden und der Position des dritten Reedkontakts. Dies ist praktisch nur dann möglich, wenn der Erregermagnet nahe der ersten beiden Reedkontakte, und daher an der Position, die bereits dem Erregermagneten zugedacht ist, angeordnet ist. Zudem ist eine feine Abstimmung der Empfindlichkeiten der Reedkontakte und der Stärke des durch den Magneten am verschieblichen Teil generierten Magnetfelds erforderlich.

Ein solcher Sensor ist insbesondere dazu geeignet, die Position eines Kolbens in einem Zylinder zu erkennen. Dabei ist der Sensor am Zylinder angeordnet, der aus nicht magnetischem Material, z.B. Aluminium besteht, und der Kolben trägt einen Magneten, vorzugsweise einen Magnetring um den Kolben herum.

Der dritte Reedkontakt ist zweckmässigerweise höchstens so empfindlich wie die zwei parallel angeordneten, gleich schaltenden Reedkontakte, damit er nicht erst bei einem stärkeren Magnetfeld als diese anspricht. Es ist sodann der Abstand zum Erregermagneten der entscheidende Faktor.

Um den Bereich für ein Sensorsignal präziser zu machen und den Grenzbereich zwischen Sensorsignal erregender und kein Sensorsignal erregender Position des Magneten möglichst kurz zu machen, ist an einem Ende der beiden gleich schaltenden Reedkontakte, und vorzugsweise an beiden Enden der Reedkontakte, der Sensor mit einer Schirmung, insbesondere einem Eisenteil bestückt ist. Diese Schirmung verzerrt das Magnetfeld des Erregermagneten, so dass das Magnetfeld durch das Material der Schirmung von dem Bereich der Reedkontakte abgelenkt wird. Ab einer bestimmten Position des Magneten springt das Magnetfeld mit dem einen Pol aus der Schirmung und mit dem anderen Pol in die Schirmung, d.h., wenn bis dahin vor allem die Feldlinien im Norden durch die Schirmung deformiert wurden und die Feldlinien im Süden praktisch undeformiert blieben, springt die Deformation plötzlich auf die Feldlinien des Südpols hinüber, während die Feldlinien des Nordpols weitgehend undeformiert bleiben. Dadurch wird ein eindeutigeres Signal erreicht.

Bei beidseitiger Schirmung ist ein ebensolches Springen erreichbar, wobei sämtliche Feldlinien deformiert sind. Die von der ersten Schirmung erfassten Feldlinien werden aber plötzlich von der anderen Schirmung erfasst, wobei die erste Schirmung sofort die Feldlinien des anderen Poles erfasst.

Die beidseitige Schirmung hat insbesondere den Vorteil, dass ein richtungsverkehrter Einbau des Sensors ausgeschlossen ist. Alternativ kann eine eindeutige Kennzeichnung des Sensors und der Position der Schirmung vorgesehen sein.

Für eine einfache, durch Vibrationen und unbeabsichtigte Manipulation nicht verrückbare Montage des Sensors, ist der Sensor an gegenüberliegenden Enden mit einem Befestigungsschwanz versehen. Dieser Befestigungsschwanz verhindert jeweils eine Verschiebung des Sensors vom Schwanzende weg, so dass mit zwei gegenüberliegenden Befestigungsschwänzen eine Verschiebung in beiden Richtungen verhindert ist.

Um die Befestigungsschwänze einfach zu befestigen sind zweckmässigerweise zwei Rastköpfe vorgesehen. Der Befestigungsschwanz ist mit einer Zahnung und der Rastkopf mit einer in der Zahnung einrastendenden Rastmechanik versehen. Die Zahnung und die Rastmechanik erlauben zusammenwirkend das Aufstecken der Rastköpfe, jedoch verhindern sie das Abziehen des einmal aufgesteckten Rastkopfes. Solche Zahnungen und Rastmechaniken sind von Kabelbindern her bekannt.

Es ist möglich vorzusehen, dass die Rastmechanik mittels eines Werkzeugs aus der Wirkverbindung mit dem Befestigungsschwanz lösbar ist.

Die einfache und sicher unverrückbare Positionierung eines Sensor zur Überwachung eines gegenüber dem Sensor translatorisch verschieblichen Teiles bezüglich seiner Position auf der Verschiebeachse, der mittels eines am verschieblichen Teil angeordneten Magneten betätigbar ist, wird erfindungsgemäss dadurch erreicht, dass der Sensor an gegenüberliegenden Enden mit einem Befestigungsschwanz versehen ist, und dass zwei Rastköpfe vorgesehen sind. Jeder Befestigungsschwanz ist mit einer Zahnung und jeder Rastkopf mit einer in der Zahnung einrastendenden Rastmechanik versehen, die zusammenwirkend das Aufstecken der Rastköpfe die Befestigungsschwänze erlauben, jedoch das Abziehen des einmal aufgesteckten Rastkopfes verhindern. Die Rastköpfe weisen einen Anschlag auf, der, nach einer Montage des Sensors z.B. an einen Zylinder, gegen eine Anschlagfläche des Zylinders drückt, so dass der Sensor durch den einen Befestigungsschwanz gehindert ist, sich in die eine Richtung zu bewegen, und mit dem anderen Befestigungsschwanz gehindert ist, sich in die entgegengesetzte Richtung zu bewegen.

Für eine Feinjustierung kann ein Anschlag der Rastköpfe über ein Gewinde mit der Rastmechanik der Rastköpfe verbunden sein, welches Gewinde sich in Längsrichtung der Befestigungsschwänze erstreckt. Sicherheitshalber müssen die Anschläge unlösbar mit der Rastmechanik verbunden sein. Ein Verdrehen der Anschläge um die Gewindeachse darf nicht zu einem Lösen des Rastkopfes vom Befestigungsschwanz führen können.

Alternativ zur Ausführung mit zwei Befestigungsschwänzen am Sensor und zwei mit diesen zusammenwirkenden Rastköpfen, kann auch der Sensor mit zwei entgegengesetzt einrastenden Rastmechaniken ausgebildet sein, und die Fixierung des Sensors durch Einschieben von mit Anschlägen und einer Zahnung versehenen Befestigungsschwänzen erfolgen. Diese werden von beiden Seiten her in die beiden Rastmechaniken eingeschoben. Zweckmässigerweise sind die Befestigungsschwänze derart ausgebildet, dass sie nebeneinander Platz finden in einer z.B. am Zylinder ausgebildeten Nut, und daher einander in Längsrichtung überlappen können.

Etwa allgemeiner formuliert ist der Sensor durch eine Befestigungseinrichtung gekennzeichnet, die mit dem Sensor zusammenwirkend oder verbunden ausgebildet ist. Diese verhindert eine Verschiebung des Sensors, insbesondere in der Verschieberichtung des Kolbens. Die Befestigungseinrichtung verbindet den Sensor über einen vorzugsweise lösbaren Formschluss mit einem Träger für den Sensor. Als Träger ist vor allem eine Wandung eines Zylinders vorgesehen. Es ist nun erfindungsgemäss ein Federmittel zum Aufrechterhalten des Formschlusses vorhanden. Die Federmittel sind unverlierbar und halten den Formschluss, z.B. zwischen Befestigungsschwanz und Rastlippe, oder zwischen einem Zahn und einer in die Oberfläche des Trägers eingepressten Vertiefung, zuverlässig aufrecht.

Der Sensor ist vorzugsweise mit einer Befestigungseinrichtung versehen, die wenigstens einen Zahn aufweist, welcher in die Oberfläche einer den Sensor aufnehmenden Nut einpressbar ist. Durch dieses Einpressen kann eine Vertiefung für den Formschluss mit dem Zahn erreicht werden. Alternativ kann aber auch z.B. eine Ränderung in der Oberfläche des Trägers vorgesehen sein, die eine Reihe von Vertiefungen aufweist. In diesem Fall rastet der Zahn in eine dieser Vertiefungen der Ränderung ein.

Die Befestigungseinrichtung umfasst zweckmässigerweise den Sensorkörper. Dadurch ist dieser ebenfalls formschlüssig mit der Befestigungseinrichtung verbunden.

Die Befestigungseinrichtung kann somit ein vom Sensor gelöstes Federelement sein. Dies hat den Vorteil, dass die Befestigungseinrichtung einstückig hergestellt werden kann aus beispielsweise einem Federstahlband, das den Sensorkörper umfassend ausgebildet ist. Zweckmässigerweise sind wenigstens zwei Zähne vorgesehen, die in Eingriff mit der Oberfläche der Nut im Träger gebracht werden können. An einem solchen Federelement ist zudem mit Vorteil ein Flansch 69 ausgebildet, der in die Hinterschneidung einer T-förmig hinterschnittenen Nut hineingreift. Damit kann das Federelement lediglich zusammen mit dem Sensor in Längsrichtung aus der Nut hinaus- bzw. hineingeschoben werden.

Die Erfindung betrifft auch einen Zylinder mit einem Kolben darin, bei welchem am Kolben ein Magnet angeordnet ist, der mit der Polarität in Bewegungsrichtung des Kolbens gerichtet ist. Am Zylinder ist ein Sensor zur Überwachung der Position des Kolbens im Zylinder angeordnet. Der Sensor ist ein erfindungsgemässer Sensor. Der erfindungsgemässe Sensor macht die Überwachung der Kolbenposition sicher. Er gewährleistet Sicherheit, indem zwei Reedkontakte gleichzeitig auf das Magnetfeld des Magneten ansprechen müssen, und der dritte Reedkontakt nicht ansprechen darf. Der dritte Reedkontakt ist durch seinen grösseren Abstand vom Magneten und Kolben in näherer Lage zu einem von Aussen wirkenden Fremdmagnetfeld. Er schaltet daher immer vor den beiden inneren Reedkontakten, wenn ein von aussen wirkendes Fremdmagnetfeld genügend stark ist, um den Sensor zu beeinflussen. Da der dritte Reedkontakt öffnet, wenn die anderen beiden schliessen (oder umgekehrt), kann durch ein Fremdmagnetfeld nicht eine sichere Position des Kolbens simuliert werden.

Am Zylinder ist vorteilhaft eine Nut ausgebildet, in welcher der Sensor in Bewegungsrichtung des Kolbens verschieblich gelagert ist. Der Sensor kann von Aussen in diese Nut eingesetzt und entlang der darin möglichen Verschieberichtung in die gewünschte Position gebracht werden.

Der Sensor ist vorteilhaft als zylindrisches Teil (jedoch nicht axialsymmetrisches und daher nicht kreiszylindrisches Teil, sondern vorzugsweise als ein zu einer Spiegelebene symmetrisch ausgebildetes, rechtwinkliges Parallelepiped) ausgebildet, dessen Zylinderachse parallel zur Längsrichtung der Reedkontakte liegt.

Durch eine Abweichung von einer Axialsymmetrie ist der Querschnitt des Sensors senkrecht zu seiner Zylinderachse derart ausgebildet, dass der Sensor lediglich in einer einzigen Drehstellung bezüglich seiner Zylinderachse in die Nut im Zylinder einschiebbar ist. Damit kann ein Einsetzen des Sensors in einer falsch ausgerichteten Lage verunmöglicht werden. Alternativ (oder zusätzlich) ist eine Markierung des Sensors möglich, die ein falsches Einsetzen des Sensors in die Nut offensichtlich erkennbar macht.

In an sich bekannter Weise ist ein Magnetring um den Kolben herum ausgebildet, damit der Kolben unabhängig seiner Drehstellung um die Kolbenachse immer den gleichen Einfluss auf den Sensor ausübt.

### Kurzbeschreibung der Figuren:

Die Erfindung wird anhand der in den Figuren dargestellten Beispiele im Folgenden näher erläutert. Es zeigt:
- Fig. 1: perspektivisch und schematisch den Grundbaustein eines erfindungsgemässen Sensors,
- Fig. 2: eine Ansicht des in einem Sensorkörper eingegossenen Sensors,
- Fig. 3: eine perspektivische Skizze eines ersten Ausführungsbeispiels des Sensors mit zwei Befestigungsschwänzen,
- Fig. 4: eine perspektivische Skizze eines Rastkopfs zum einrastenden Zusammenwirken mit einem Befestigungsschwanz,
- Fig. 5: einen Längsschnitt durch einen Zylinder mit einem erfindungsgemässen Sensor und einem Erregermagneten am Kolben, bei dem der Kolben in einer unsicheren Position ist,
- Fig. 6: einen Querschnitt durch den Zylinder gemäss Figur 5,
- Fig. 7: einen Längsschnitt durch den Zylinder, bei dem der Kolben in einer sicheren Position ist,
- Fig. 8: einen Ausschnitt aus einem Längsschnitt durch einen Zylinder mit einem zweiten Ausführungsbeispiels eines Sensors ohne Befestigungsschwänze, mit dem Kolben in einer sicheren und einer unsicheren Position, wobei je eine Feldlinie dargestellt ist, die durch die im Sensor vorhandene Schirmung deformiert ist.
- Fig. 9: eine Ansicht eine Zylinders in Richtung der Zylinderachse des Sensors und der Bewegungsachse des Kolbens, mit einer T-förmigen Nut und darin einem erfindungsgemässen Sensor.
- Fig. 10: ein Ausschnitt aus Fig. 9 mit dem mit einer Sicherungseinrichtung versehenen Sensor in der Nut.
- Fig. 11: eine perspektivische Skizze eines Sensors und eine Federelements zum Befestigen des Sensors in einer T-förmig hinterschnittenen Nut.
- Fig. 12: eine Aufsicht auf eine andere Ausführungsform eines solchen Federelements.

- Fig. 13: vier Schaltschemen, die eine Erfassung des Sensorzustands mit zwei elektrischen Leitungen ermöglichen.

### Detaillierte Beschreibung der Figuren:

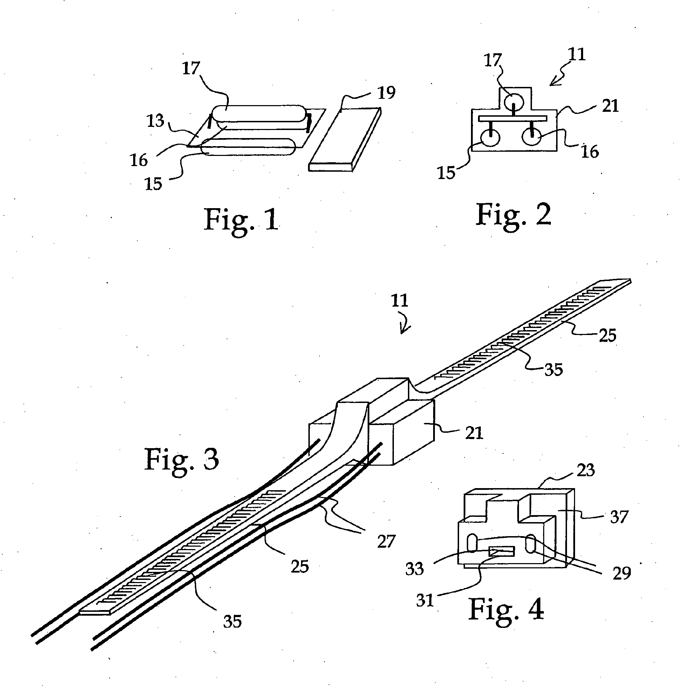

Das in Figur 1 dargestellte Kernstück des Sensors 11 ist aus einer Printplatte 13 und zwei ersten Reedkontakten 15,16 und einem dritten Reedkontakt 17 zusammengesetzt. Die ersten beiden Reedkontakte 15 und 16 sind parallel angeordnete Schliesser. Der dritte Reedkontakt 17 ist in Serie mit dem ersten Reedkontakt 15 geschaltet und ein Öffner.

Die ersten beiden Reedkontakt sind unterhalb der Printplatte 13 in einer gemeinsamen Ebene und so nebeneinander angeordnet, dass die Anschlusspunkte für die Reedkontakte in einem Rechteck angeordnet sind. Der dritte Reedkontakt 17 ist oberhalb der Printplatte 13 und parallel zu diesen angeordnet. Seine Anschlusspunkte liegen auf zwei Seiten des Rechtecks gebildet durch die Anschlusspunkte der ersten beiden Reedkontakte 15, 16.

In der Ebene der beiden ersten Reedkontakte 15 und 16 ist ein Metallstab als magnetische Schirmung 19 angeordnet. Die räumliche Ausbildung dieser Schirmung ist von untergeordneter Bedeutung. Die Längsrichtung des Metallstabs ist im Beispiel senkrecht zur Längsrichtung der Reedkontakte 15 und 16 ausgerichtet. Die Breite des Metallstabs ist in Längsrichtung der Reedkontakte 15 und 16 gerichtet. Dadurch ist die Schirmung möglichst im Abstand zum dritten Reedkontakt angeordnet und schirmt die beiden ersten Reedkontakte gut ab.

Diese erwähnten Teile sind in den in Figur 2 dargestellten Kunststoff-Sensorkörper 21 eingegossen. Dieser Sensorkörper 21 hat einen T-förmigen Querschnitt. Innerhalb des nach oben gerichteten Stammes des T ist der dritte Reedkontakt 17, im Balken des T sind die Printplatte und die beiden ersten Reedkontakte 15 und 16, sowie, falls vorhanden, die Schirmung 19 angeordnet. Der Sensorkörper 21 ist in seiner Form auf die Aufnahmeeinrichtung angepasst, die den Sensor aufnehmen soll. Die dargestellte zylindrische Form mit dem T-förmigen Querschnitt ist geeignet, den Sensor längsverschieblich in einer T-förmig hinterschnitten ausgebildeten Nut anzuordnen.

Der in Figur 3 dargestellte Sensor 11 mit zwei des in Figur 4 dargestellten Rastkopfes 23 auf den beiden Befestigungsschwänzen 25 ist in unterschiedlichen Positionen in einer solchen T-förmig hinterschnittenen Nut festlegbar. Der Sensor 11 besitzt am zentralen Sensorkörper 21 auf den einander gegenüberliegenden, T-förmigen Stirnseiten, die senkrecht zur Längsrichtung der Reedkontakte liegen, je einen Befestigungsschwanz 25. Diese sind einstückig mit dem Sensorkörper 21 gegossen. Aus einer dieser Stirnseiten treten Anschlusskabel 27 für den Sensor heraus. Diese können entgegen der Darstellung auch auf beiden Stirnseiten austreten. Die Anschlusskabel 27 können durch Öffnungen 29 im Rastkopf 23 hindurch geführt werden.

Am Rastkopf 23 ist eine Rastöffnung 31 zur Durchführung des Befestigungsschwanzes 25 ausgebildet. In dieser Rastöffnung 31 ist eine Rastlippe 33 ausgebildet, die mit den Zähnen 35 an den Befestigungsschwänzen 25 ein Eingriff gehen kann. Am Rastkopf ist eine Anschlagfläche 37 ausgebildet, die mit einer Stirnseite der die Nut bildenden Wandung zusammenwirken kann.

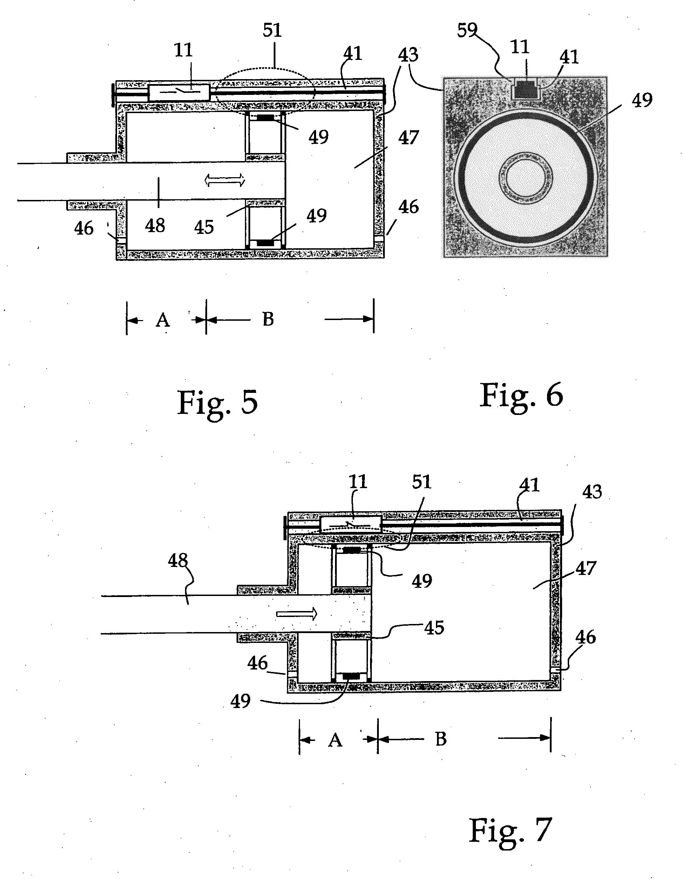

In Figur 5 ist ein solcher Sensor 11 in einer Nut 41 in der Wandung eines Zylinders 43 angeordnet. Der Kolben 45 ist in einem Zylinderraum 47 linear beweglich gelagert. Er kann durch Luft, Hydrauliköl oder ein anderes Medium hin und her geschoben werden, oder aber er bewegt dieses Medium durch sein z.B. motorisch erwirkte Lageänderung. Für den Eintritt und den Austritt des Mediums sind in der Kolbenwandung Öffnungen 46 vorgesehen. Diese Bewegung des Kolbens wird mit Stempel 48 von einem Motor auf den Kolben oder vom Kolben auf beispielsweise ein Werkzeug übertragen. Am Umfang des Kolbens 45 ist ein ringförmiger Magnet 49 angeordnet. Eine Feldlinie 51 stellt das lokale Magnetfeld des Magneten 49 schematisch vereinfacht dar.

In Figur 5 ist der Kolben im unsicheren Bereich B. In Figur 7 ist der Kolben 45 im sicheren Bereich A dargestellt. Wenn der Kolben 45 im unsicheren Bereich B vorliegt, ist der Magnetfeld des Magneten 49 nicht genügend stark, um die Reedkontakte im Sensor 11 zu schalten. Erst in einer Position, in welcher die Feldlinien sich durch die Reedkontakte hindurch erstrecken, vermag der Magnet diese zu schalten. Die beiden ersten Reedkontakte 15 und 16 sind dem Magneten näher. Sie schirmen daher den äusseren dritten Reedkontakt zusätzlich ab. Die Magnetlinien erstrecken sich, sobald diese in den Bereich der Kontaktelemente des Reedschalters gelangen, konzentriert durch diese hindurch und erregen dadurch in diesen die den Kontakt schliessende Kraft.

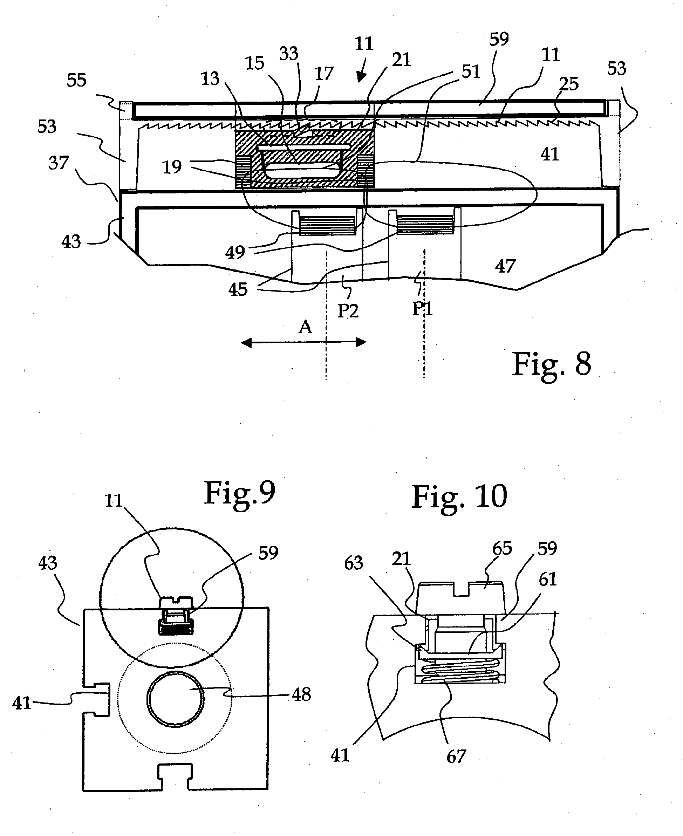

In Figur 8 sind die selben Situationen wie in Figuren 5 und 7 dargestellt. Es ist der Sensor 11 aber mit zwei Schirmungen 19 versehen. Die Feldlinien 51 sind daher in beiden Stellungen des Kolbens 45 verzerrt. Es gibt daher in Bereich des Sensors 11 eine sichere Stellung A. Ausserhalb dieses Bereichs befindet sich der Kolben 45 in einer unsicheren Stellung. Der Übergangsbereich zwischen diesen Bereichen ist mit der Schirmung 19 präziser als ohne diese Schirmung.

Weiter ist in Figur 8 im Unterschied zu den Figuren 1 bis 7 der Sensor 11 nicht mit zwei Befestigungsschwänzen 25, sondern mit zwei Einrastmechaniken, insbesondere zwei Einrastlippen 33, zum rastenden Eingreifen in die Zahnung 35 von Fixierungsteilen 53 ausgebildet. Diese Fixierungsteile 53 besitzen einen Befestigungsschwanz 25 mit einer Zahnung 35 und einen Anschlagkopf 55. Die Zähne des Befestigungsschwanzes 25 greifen in die Einrastlippen an Sensorkörper 21 ein. Da die in Eingriff mit diesen stehenden Befestigungsschwänze nicht mehr zurück gezogen werden können, ist dadurch der Sensorkörper in seiner Lage fixiert, sobald die beiden Anschlagköpfe der Fixierungsteile 53 in Anschlag mit dem Zylinder 43 sind. Damit die Anschlagköpfe nicht über die Länge des Zylinders 43 vorstehen, ist die Nut an ihrem Ende erweitert und die Anschlagköpfe 55 passen in die erweiterte Nut. Zweckmässigerweise sind die beiden seitlichen Flansche 59 der Nutwandung, die den Hinterschnitt bilden, an ihrem Ende ausgeschnitten.

Die Eingriffnahme kann mit einem Werkzeug lösbar sein. Dazu ist entweder die Rastlippe 33 vom Befestigungsschwanz 25 weg drückbar, oder der Befestigungsschwanz 25 von der Einrastlippe 33 abhebbar. Im ersten Fall ist die Einrastlippe 33 federnd mit dem Sensorkörper 21 verbunden oder auf einem federnd mit dem Sensorkörper 21 verbundenen Teil ausgebildet. Im zweiten Fall sind die Befestigungsschwänze 25 federn gegenüber der Nut 41 abgestützt. Jedenfalls wird die Eingriffnahme durch Federmittel aufrechterhalten.

Ein weiteres Beispiel für die sichere Befestigung des Sensors 11 in der Nut 41 eines Zylinders 43 ist in Figuren 9 und 10 dargestellt. Am Sensor 11 ist eine Befestigungsscheibe 61 befestigt, die aus einem härteren Material besteht als der Mantel des Zylinders, in welchem die T-förmig hinterschnittene Nut 41 ausgebildet ist. Diese Scheibe 61 ist mit einem Gewinde versehen, in welches eine Schraube 65 eingeschraubt ist. Am Rand oder an den vier Ecken der Scheibe 61 sind Zähne 63 ausgebildet. Diese Zähne können durch Anziehen der Schraube 65 in das Material der den Hinterschnitt der Nut 41 bildenden Flansche 59 eingedrückt werden. Die Zähne sind damit in Eingriff mit dem Flansch 59. Es hat sich so ein Formschluss gebildet. Diese Scheibe wird durch eine Feder 67 in dieser Eingriff nehmenden Stellung gehalten. Die Feder 67 kann, wie dargestellt, eine Schraubenfeder sein, oder aber auch eine Blattfeder. Die Federung kann vorgesehen sein zwischen dem Sensor mit Befestigungsscheibe und der Nut, oder aber zwischen dem Sensorkörper 21 und der Befestigungsscheibe 61. Durch zurückdrehen der Schraube 65 und Einpressen der Schraube entgegen der Federkraft der Feder 67 kann die Scheibe 61 aus der Eingriffnahme mit der Nutwandung gelöst werden, so dass der Sensor verschoben werden kann. Der Sensor wird sich aber nicht unbeabsichtigt verschieben, da die Eingriffnahme durch die Federkraft gesichert ist.

Anstelle der Scheibe 61 kann auch eine Blattfeder mit Zähnen 63 und einem Gewinde versehen sein und daher die Aufgabe der Scheibe und der Feder gleichzeitig übernehmen. Zum Einpressen der Zähne in die Nutwandung kann auch ein vom Sensor unabhängiges Werkzeug verwendet werden anstelle der Schraube 65.

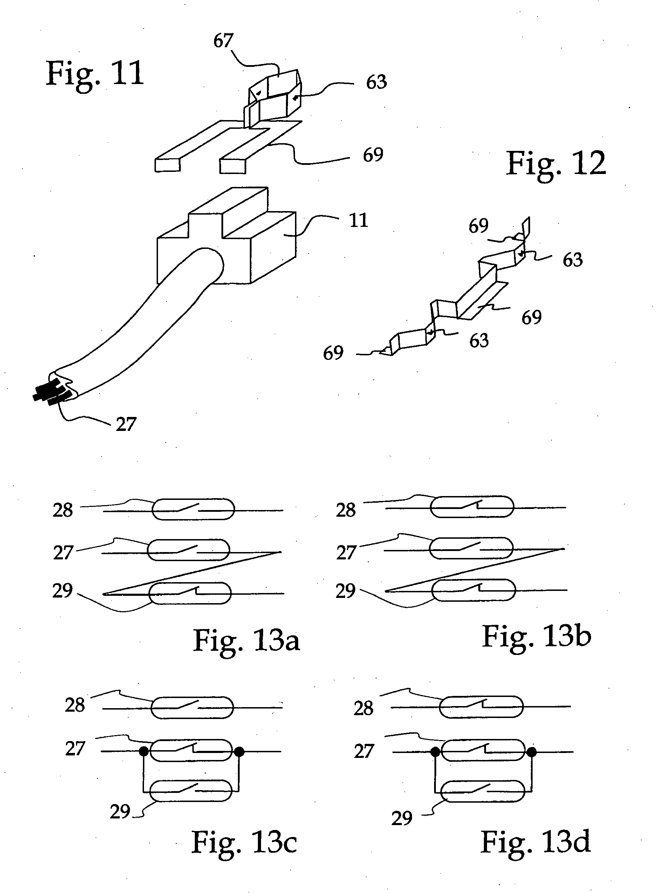

Das in Figur 11 dargestellte Federelement zur Befestigung des Sensors 11 in einer T-förmig hinterschnittenen Nut 41 ist einstückig hergestellt aus einem Federstahl. Es besitzt einen den Sensorkörper 21 umfangenden Teil und einen Federteil mit zwei Zähnen 63, die in Eingriff mit einer Vertiefung in der Seitenwand der Nut, insbesondere des schmaleren und äusseren Teiles der T-förmigen Nut, gebracht werden können. Diese Vertiefungen können durch Eindrücken des Zahns 63 in das Aluminium des Kolbenmantels erreicht werden.

Die den Sensorkörper 21 umfassenden Teile liegen in montierter Stellung zwischen dem Sensorkörper und dem Flansch 59. Sie können zusätzlich eine Federkraft auf den Sensor ausüben, die diesen gegen den Grund der Nut drückt. Die Zähne 63 im federnden Teil werden durch die Federkraft dieses Teil nach aussen gedrückt. Sie liegen in entspanntem Zustand des Federelements in grösserem Abstand voneinander als die Breite der Nut. Dadurch müssen sie beim Einführen des Federelements in die Nut unter Verformung der Federteile gegeneinander angenähert werden. Mit einem Schraubenzieher oder einem besonderen Werkzeug können die aus dem Federstahl herausgestanzten und umgeklappten Zähne 63 einander direkt gegenüber in das Aluminium des Flansches 59 eingepresst werden und halten dort daher formschlüssig.

Eine Variante eines solchen Federelements ist in Figur 12 dargestellt. Diese besitzt ebenfalls Flansche 69, einen den Sensorkörper umfangenden Teil und zwei Federteile mit Zähnen 63. Diese liegen hier jedoch vor und hinter dem Sensor.

In Figur 13 sind vier Schaltschemen dargestellt, bei denen die drei Reedkontakte 15,16,17 zu zwei Leiterbahnen zusammengefasst sind und drei unterscheidbare Schaltmuster aufweisen können. Abgesehen von diesen Schaltschemen ist es auch möglich, die drei Reedkontakte einzeln abzugreifen und mit einer nachgeschalteten Logik den Schaltzustand des Sensors zu analysieren.

In Figuren 13a und 13b sind jeweils der erste Reedkontakt 15 und der dritte Reedkontakt 17 in Serie geschaltet. Bei der Serieschaltung ist es erforderlich, dass der erste Reedkontakt ein Schliesser und der dritte ein Öffner ist, um ein eindeutiges Sensorsignal zu erhalten. Der zweite Reedkontakt kann ein Öffner (Fig. 13b) oder ein Schliesser (Fig. 13a) sein.

In den Figuren 13c und 13d sind der erste Reedkontakt 15 und dritte Reedkontakt 17 parallel geschaltet. Dies erfordert, dass der erste Reedkontakt 15 ein Öffner ist und der dritte Reedkontakt 17 ein Schliesser ist, damit eindeutige Sensorsignale generiert werden. Der zweite Reedkontakt kann dabei wieder ein Öffner oder ein Schliesser sein.

Der Zustand der Reedkontakte wird mit einer logischen Schaltung (vorzugsweise mit einem Elektronikbauteil) analysiert. Bei den angeführten Schaltungen gilt folgendes:

| Schema | 13a | | 13b | | 13c | | 13d | |
|---|---|---|---|---|---|---|---|---|
| Reedkontakte | 15/17 | 16 | 15/17 | 16 | 15/17 | 16 | 15/17 | 16 |
| Aktiviert durch Erregerteil | 1 | 1 | 1 | 0 | 0 | 1 | 0 | 0 |
| Nicht aktiviert | 0 | 0 | 0 | 1 | 1 | 0 | 1 | 1 |
| Aktiviert durch Fremdmagnetfeld | 0 | 1 | 0 | 0 | 1 | 1 | 1 | 0 |

Sind die Reedkontakte einzeln abgegriffen, kann jeder Reedkontakt unabhängig vom andern ein Öffner oder ein Schliesser sein. Die logische Schaltung muss entsprechend so ausgelegt sein, dass die Offenstellung und Geschlossenstellung der einzelnen Reedkontakte richtig interpretiert werden.

## Patentansprüche

1. Sensor (11) zur Überwachung eines gegenüber dem Sensor (11) translatorisch verschieblichen Teiles (45) bezüglich seiner Position auf der Verschiebeachse, insbesondere eines Kolbens (45) in einem mit dem Sensor (11) ausgerüsteten Zylinder (43), welcher Sensor (11) mittels eines am verschieblichen Teil (45) angeordneten, bezüglich Nord und Südpol in Verschieberichtung orientierten Magneten (19) betätigbar ist, **dadurch gekennzeichnet, dass** der Sensor (11) drei parallel ausgerichtete Reedkontakte (15,16,17) aufweist, von denen ein erster (15) und ein zweiter Reedkontakt (16) in einer Ebene und mit ihren Längsachsen parallel nebeneinander angeordnet sind, wodurch sie durch das Magnetfeld (51) des am verschieblichen Teil (45) angeordneten Magneten (19) praktisch gleichzeitig betätigbar sind, und der dritte Reedkontakt (17) in einem Abstand zur Ebene des ersten und zweiten Reedkontakts (15,16) angeordnet ist.

2. Sensor nach Anspruch 1, **dadurch gekennzeichnet, dass** der dritte Reedkontakt (17) höchstens so empfindlich ist wie die zwei gleich schaltenden Reedkontakte (15,16) es sind.

3. Sensor nach Anspruch 1 oder 2, **dadurch gekennzeichnet, dass** in Längsrichtung der Reedkontakte (15,16,17) an einem Ende der Reedkontakte der Sensor (11) mit einer Schirmung (19), insbesondere einem Eisenteil bestückt ist.

4. Sensor nach Anspruch 3, **dadurch gekennzeichnet, dass** an beiden Enden der Reedkontakte (15,16,17) je eine Schirmung (19) vorgesehen ist.

5. Sensor nach einem der vorangehenden Ansprüche, **dadurch gekennzeichnet, dass** der Sensor (11) an gegenüberliegenden Enden mit einem Befestigungsschwanz (25) versehen ist.

6. Sensor nach Anspruch 5, **dadurch gekennzeichnet, dass** zwei Rastköpfe (23) vorgesehen sind, der Befestigungsschwanz (25) mit einer Zahnung (35) und der Rastkopf (23) mit einer in der Zahnung einrastendenden Rastmechanik (33) versehen ist, die zusammenwirkend das Aufstecken der Rastköpfe (23) erlauben, jedoch das Abziehen des aufgesteckten Rastkopfes (23) verhindern.

7. Sensor nach Anspruch 6, **dadurch gekennzeichnet, dass** die Rastmechanik (33) mittels eines Werkzeugs aus der Wirkverbindung mit dem Befestigungsschwanz (25) lösbar ist.

8. Ein Zylinder (43) mit einem Kolben (45) darin, am Kolben (45) einem Magneten (19) mit der Richtung der Polarität in Bewegungsrichtung des Kolbens (45) im Zylinder (43), und am Zylinder (43) einem Sensor (11) zur Überwachung der Position des Kolbens (45) im Zylinder (43), **dadurch gekennzeichnet, dass** der Sensor (11) ein Sensor nach einem der vorangehenden Ansprüche ist.

9. Zylinder nach Anspruch 8, **dadurch gekennzeichnet, dass** der Sensor (11) als zylindrisches Teil ausgebildet ist, dessen Zylinderachse parallel zur Längsrichtung der Reedkontakte (15,16,17) liegt.

10. Zylinder nach Anspruch 8 oder 9, **dadurch gekennzeichnet, dass** am Zylinder (43) eine Nut (41) ausgebildet ist, in welcher der Sensor (11) in Bewegungsrichtung des Kolbens (45) verschieblich gelagert ist.

11. Zylinder nach Anspruch 10, **dadurch gekennzeichnet, dass** der Querschnitt des Sensors (11) senkrecht zu seiner Zylinderachse derart ausgebildet ist, dass der Sensor (11) lediglich in einer einzigen Drehstellung bezüglich seiner Zylinderachse in die Nut (41) im Zylinder (43) einschiebbar ist.

12. Zylinder nach einem der Ansprüche 8 bis 11, **dadurch gekennzeichnet, dass** ein Magnetring (19) um den Kolben (45) herum ausgebildet ist.

## Claims

1. Sensor (11) for monitoring a part (45) displaceable by translation with respect to the sensor (11) with regard to its position on the displacement axis, in particular of a piston (45) in a cylinder (43) equipped with the sensor (11), which sensor (11) can be actuated by means of a magnet (19) placed on the displaceable part (45), orientated with respect to north and south pole in the direction of displacement, **characterized in that** the sensor (11) has three parallel orientated Reed contacts (15, 16, 17), a first (15) and a second Reed contact (16) of them are placed in a plane and with their longitudinal axes parallel side by side so that they can be actuated practically simultaneously by the magnetic field (51) of the magnet (19) placed on the displaceable part (45) and the third Reed contact (17) is placed at a distance from the plane of the first and of the second Reed contact (15, 16).

2. Sensor according to claim 1, **characterized in that** the third Reed contact (17) is maximally as sensitive as the two simultaneously switched Reed contacts (15, 16).

3. Sensor according to claim 1 or 2, **characterized in that** the sensor (11) is equipped in the longitudinal direction of the Reed contacts (15, 16, 17) at one end of the Reed contacts with a shielding (19), in particular with an iron part.

4. Sensor according to claim 3, **characterized in that** a shielding (19) is respectively provided at both ends of the Reed contacts (15, 16, 17).

5. Sensor according to one of the preceding claims, **characterized in that** the sensor (11) is provided with a fixing tail (25) at opposed ends.

6. Sensor according to claim 5, **characterized in that** two snap-in heads (23) are provided, the fixing tail (25) is provided with an indentation (35) and the snap-in head (23) with a snap-in mechanism engaging into the indentation that cooperate and allow the engagement of the snap-in heads (23) by however impeding the detaching of the engaged snap-in head (23).

7. Sensor according to claim 6, **characterized in that** the snap-in mechanism (33) can be detached from the active connection with the fixing tail (25) by means of a tool.

8. Cylinder (43) with a piston (45) inside, a magnet (19) on the piston (45) with the polarity direction in the direction of displacement of the piston (45) in the cylinder (43) and with a sensor (11) on the cylinder (43) for monitoring the position of the piston (45) in the cylinder (43), **characterized in that** the sensor (11) is a sensor according to one of the preceding claims.

9. Cylinder according to claim 8, **characterized in that** the sensor (11) is configured as a cylindrical part, the cylinder axis of which is situated parallel to the longitudinal direction of the Reed contacts (15, 16, 17).

10. Cylinder according to claim 8 or 9, **characterized in that** a groove (41) in which the sensor (11) is positioned displaceable in the direction of displacement of the piston (45) is formed on the cylinder (43).

11. Cylinder according to claim 10, **characterized in that** the cross-section of the sensor (11) is configured perpendicularly to its cylinder axis in such a way that the sensor (11) can be pushed into the groove (41) in the cylinder (43) only in one single rotation position with respect to its cylinder axis.

12. Cylinder according to one of the claims 8 to 11, **characterized in that** a magnetic ring (19) is formed around the piston (45).

## Revendications

1. Capteur (11) pour le contrôle d'une pièce déplaçable en translation (45) par rapport au capteur (11) pour ce qui est de sa position sur l'axe de déplacement, en particulier d'un piston (45) dans un cylindre (43) équipé du capteur (11), lequel capteur (11) peut être actionné au moyen d'un aimant (19) placé sur la partie déplaçable (45), orienté pour ce qui est du pôle nord et du pôle sud dans le sens de déplacement, **caractérisé en ce que** le capteur (11) présente trois contacts Reed (15, 16, 17) orientés parallèlement dont un premier contact Reed (15) et un second contact Reed (16) sont placés dans un plan et avec leurs axes longitudinaux parallèlement l'un à côté de l'autre si bien qu'ils peuvent être actionnés pratiquement simultanément par le champ magnétique (51) de l'aimant (19) placé sur la pièce déplaçable (45) et le troisième contact Reed (17) est placé à une distance du plan du premier et du second contact Reed (15, 16).

2. Capteur selon la revendication 1, **caractérisé en ce que** le troisième contact Reed (17) est au plus aussi sensible que les deux contacts Reed commutés simultanément (15, 16).

3. Capteur selon la revendication 1 ou 2, **caractérisé en ce que** dans le sens longitudinal des contacts Reed (15, 16, 17) le capteur (11) est équipé d'un blindage (19), en particulier d'une pièce en fer, à une extrémité des contacts Reed.

4. Capteur selon la revendication 3, **caractérisé en ce qu'**un blindage (19) est prévu respectivement aux deux extrémités des contacts Reed (15, 16, 17).

5. Capteur selon l'une des revendications précédentes, **caractérisé en ce que** le capteur (11) est pourvu d'une queue de fixation (25) à des extrémités opposées.

6. Capteur selon la revendication 5, **caractérisé en ce que** deux têtes d'encliquetage (23) sont prévues, la queue de fixation (25) est pourvue d'une denture (35) et la tête d'encliquetage (23) d'un mécanisme d'encliquetage (33) qui s'engrène dans la denture, qui en coopérant permettent l'emboîtement des têtes d'encliquetage (23) en empêchant cependant l'enlèvement de la tête d'encliquetage emboîtée (23).

7. Capteur selon la revendication 6, **caractérisé en ce que** le mécanisme d'encliquetage (33) peut être détaché de la relation active avec la queue de fixation (25) au moyen d'un outil.

8. Cylindre (43) avec un piston (45) à l'intérieur, un aimant (19) sur le piston (45) avec le sens de la polarité dans le sens du déplacement du piston (45) dans le cylindre (43) et un capteur (11) sur le cylindre (43) pour le contrôle de la position du piston (45) dans le cylindre (43), **caractérisé en ce que** le capteur (11) est un capteur selon l'une des revendications précédentes.

9. Cylindre selon la revendication 8, **caractérisé en ce que** le capteur (11) est configuré comme une pièce cylindrique dont l'axe de cylindre est situé parallèlement au sens longitudinal des contacts Reed (15, 16, 17).

10. Cylindre selon la revendication 8 ou 9, **caractérisé en ce qu'**une rainure (41), dans laquelle le capteur (11) est positionné déplaçable dans le sens de déplacement du piston (45,) est formée sur le cylindre (43).

11. Cylindre selon la revendication 10, **caractérisé en ce que** la section transversale du capteur (11) est configurée perpendiculairement à son axe de cylindre de telle manière que le capteur (11) peut coulisser dans la rainure (41) dans le cylindre (43) seulement dans une seule position de rotation par rapport à son axe de cylindre.

12. Cylindre selon l'une des revendications 8 à 11, **caractérisé en ce qu'**un anneau magnétique (19) est formé autour du piston (45).
